# FASCICULE DE BREVET EUROPEEN

(11) **EP 3 610 339 B1**
(45) Date de publication et mention de la délivrance du brevet: **06.08.2025**
(21) Numéro de dépôt: 18721472.1
(22) Date de dépôt: 11.04.2018
(51) Int. Cl.: G05B 19/4065, G05B 23/02, B23Q 17/00

(54) **BROCHE D'USINAGE**
BEARBEITUNGSSPINDEL
MACHINING SPINDLE

(30) Priorité: 12.04.2017 CH 4982017
(43) Date de publication de la demande: 19.02.2020
(73) Titulaire: Böni, Martin, 2034 Peseux (CH)
(72) Inventeur: Böni, Martin, 2034 Peseux (CH)
(74) Mandataire: P&TS SA (AG, Ltd.)
(86) Numéro de dépôt international: PCT/IB2018/052531
(87) Numéro de publication internationale: WO 2018/189691

(56) Documents cités:
- EP-A1- 2 446 998
- DE-A1- 102010 054 999
- DE-A1- 102014 116 861

## Description

### Domaine technique

La présente invention concerne une broche pour usinage comprenant un boîtier renfermant un moteur électrique entrainant en rotation un outil d'usinage, telle qu'une électrobroche et une broche motorisée.

Sont également divulgués un dispositif de monitorage pour broche d'usinage et une méthode de mise-à-jour d'une broche d'usinage ne faisant pas partie de l'invention revendiquée.

### Etat de la technique

La production de pièces, notamment de taille réduite et à haute valeur ajoutée, s'effectue souvent par l'emploi de broches d'usinage.

La gestion de l'ensemble des broches d'usinage d'un atelier (c'est-à-dire d'un parc de broches) devient ainsi nécessaire afin de garantir en tout temps une disponibilité d'un nombre suffisant de broches permettant des opérations d'usinage correctes et conformes aux spécificités d'usinage, ce qui implique une planification d'opérations de révision ainsi que de remplacement préventif pour chaque broche de l'atelier.

Le document US2009267429 décrit une broche destinée à une machine-outil comprenant une puce RFID pouvant être lue par l'intermédiaire d'un élément de lecture. La puce RFID peut contenir des données de fabrication de la broche, telle que son numéro de série, sa date de délivrance, des détails de sa garantie, ainsi que des données d'usinage, telle que la vitesse de rotation, le couple et des jeux de paramètres pour machine-outil à commande numérique.

DE 10 2010 054 999 A1, EP 2 446 998 A1 et DE 10 2014 116 861 A1 divulguent également des broches d'usinage.

### Bref résumé de l'invention

Un but de la présente invention est de proposer une broche pour usinage, notamment une broche motorisée ou électrobroche, qui permet une gestion plus aisée de cette dernière parmi un parc de broches d'usinage d'un atelier par rapport aux broches d'usinage connues.

Un autre but de l'invention est de proposer une broche pour usinage, notamment une broche motorisée ou électrobroche, qui permet une rationalisation d'opérations de révision et de remplacement préventif de la broche.

Selon l'invention, ces buts sont atteints au moyen de la broche selon la revendication 1 et le set d'usinage selon la revendication 12. Les revendications dépendantes décrivent des modes de réalisation particuliers de l'invention.

Cette solution présente notamment l'avantage par rapport à l'art antérieur de disposer d'un indicateur de l'usure et/ou de l'état fonctionnel de la broche, ce qui permet d'adapter dynamiquement le plan de manutention, de révision et de substitution de la broche.

Dans un mode de réalisation particulier de l'invention, la broche d'usinage sauvegarde des données techniques, opérationnelle et/ou d'usinage qui facilitent sa mise en opération ainsi que les opérations de manutention, de révision et de diagnostic.

Dans un mode de réalisation particulier de l'invention, la broche d'usinage permet une maintenance prédictive basée sur des analyses de données de détermination de l'état de rotation du moteur et/ou de l'outil d'usinage, notamment par les capteurs de vibration et/ou de température.

Est divulgué également un dispositif de monitorage pour broche d'usinage. Cette solution permet de mettre à jour une broche d'usinage du marché de manière à permettre une gestion plus aisée de cette dernière parmi un parc de broches d'usinage d'un atelier ainsi qu'une rationalisation d'opérations de révision et de remplacement préventif de la broche.

### Brève description des figures

Des exemples de mise en œuvre de l'invention sont indiqués dans la description illustrée par les figures annexées dans lesquelles :
la figure 1 illustre un premier mode de réalisation d'une broche d'usinage, selon l'invention ;
les figures 2 et 3 illustrent un deuxième et un troisième mode de réalisation d'une broche d'usinage, selon l'invention;
les figures 4 et 5 illustrent des exemples de gestion d'une broche, respectivement d'un parc de broches d'un atelier, selon l'invention.

### Exemple(s) de mode de réalisation de l'invention

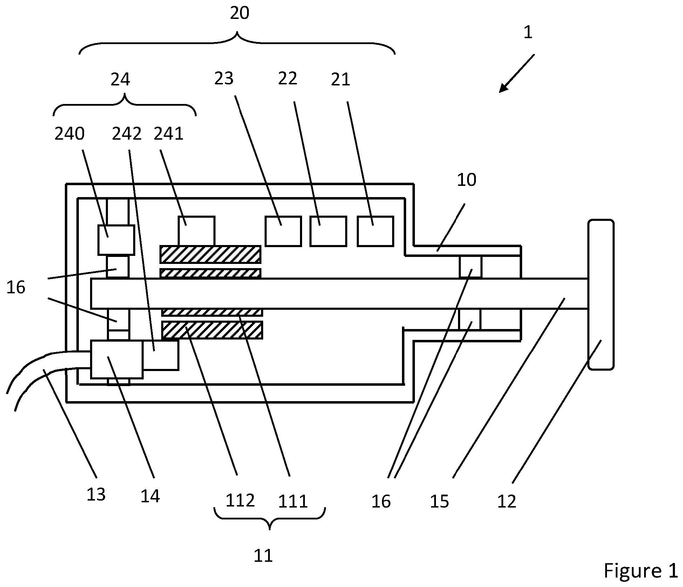

La figure 1 illustre une broche 1 pour usinage, notamment une électrobroche ou broche motorisée. La broche 1 est destinée à usiner une pièce (pas illustrée) à l'aide un outil d'usinage 12 rotatif qui est entrainé en rotation par un moteur 11 électrique équipant la broche 1, au travers d'un arbre 15.

L'outil d'usinage 12 équipant la broche peut être tout type d'outil opérant par rotation, notamment un outil de décolletage, de fraisage, de perçage, de rectification, de taillage, et/ou de tournage.

La broche 1 pour usinage de la figure 1 est destinée à un usinage de pièces, tels que des pièces d'horlogerie et de bijouteries. La broche est généralement montée de façon mobile sur une base configurée pour être fixée et/ou posée sur une table de travail. Le déplacement de la broche par rapport à la base s'effectue par un mécanisme de déplacement, commandé électriquement ou manuellement par un opérateur.

La broche 1 comprend un boîtier 10 renfermant le moteur électrique ainsi qu'une partie de l'arbre 15 de sorte à les protéger contre une intrusion de poussières et/ou de liquides tout en garantissant une protection de l'utilisateur contre un contact involontaire avec des composantes mobiles ou rendus incandescentes par le moteur et par l'usinage effectué à travers de l'outil d'usinage 12. L'arbre est relié au boîtier au moyen d'une liaison pivot, par exemple réalisée par une des paliers 16, de préférence à roulement, opérant sur deux portions éloignées de l'arbre.

Le moteur 11 est alimenté par une alimentation 14 configuré à être relié à un réseau d'alimentation au travers d'un câble 13. L'alimentation peut être logée à l'extérieur ou à l'intérieur du boîtier de la broche.

La broche 1 comprend un compteur 20 de temps de fonctionnement électronique.

Le compteur 20 comprend:
- un premier circuit électronique 24, 240, 241, 242 arrangé pour déterminer un état de rotation du moteur 11 et/ou de l'outil d'usinage 12;
- un second circuit électronique 22 configuré pour effectuer un comptage du temps de fonctionnement de la broche à partir de signaux fournis par ce premier circuit électronique ; et
- un module de communication 21 arrangé pour transmettre ledit temps de fonctionnement à travers une interface de communication avec ou sans fils.

Un état de rotation du moteur 11 et/ou de l'outil d'usinage 12 indique un mouvement de rotation d'une partie rotative, notamment du rotor 111, du moteur et/ou de l'outil d'usinage 12 autour de son axe de rotation. Eventuellement, un état de rotation peut indiquer un mouvement de rotation d'une partie rotative, notamment du rotor 111, du moteur et/ou de l'outil d'usinage 12 qui dépasse un seuil de vitesse de rotation prédéfini, notamment permettant, ou caractérisant, une opération d'usinage prédéfinie.

Un état de rotation du moteur 11 et/ou de l'outil d'usinage 12 peut être déterminé au moyen d'un capteur de vibration 240 arrangé pour capter des vibrations affectant le boîtier 10, un ou les palier(s), le moteur 11 électrique et/ou l'outil d'usinage de la broche. Une rotation lors d'une opération prédéfinie d'usinage peut être ainsi déterminée par une plage prédéfinie d'amplitudes, de fréquences et/ou de directions des vibrations.

Alternativement ou complémentairement, un état de rotation du moteur 11 et/ou de l'outil d'usinage 12 peut être déterminé au moyen d'un circuit inductif ou un capteur de champ magnétique 242 arrangé pour capter un camp magnétique et/ou électromagnétique généré par le moteur 11 électrique (notamment par son stator 112 et/ou rotor 111) et/ou d'une (composante d'une) alimentation 13, 14 de ce dernier lorsque le moteur sous tension.

Alternativement ou complémentairement, un état de rotation du moteur 11 et/ou de l'outil d'usinage 12 peut être déterminé au moyen d'un capteur thermique 241 arrangé pour capter une température du boîtier 10, d'un ou des paliers 16, du moteur 11 électrique, de l'outil d'usinage et/ou du (des) palier(s) de la broche, notamment d'une hausse de température causée par le moteur lorsqu'il est actionné, par l'outil d'usinage opère un usinage sur une pièce, et/ou par la rotation du (des) palier(s).

La communication des données du premier circuit électronique peut être effectuée vers le second circuit électronique et/ou vers le module de communication 21 par fil ou sans-fil.

La broche comprend une source d'alimentation électrique pour alimenter le compteur de la broche.

Dans le mode de réalisation illustré par la figure 1, le premier circuit électronique comprend, à titre d'exemple, un capteur de vibration 240, un capteur de champ magnétique 242 et un capteur thermique 241.

Le capteur de vibration 240 est fixé à une paroi, interne ou externe, d'un des paliers 16. Il comprend un accéléromètre captant des vibrations du palier, préférablement des accélérations radiales par rapport à l'axe de rotation du moteur 11 et/ou de l'arbre 15.

Le capteur de champ magnétique 242 est fixé à une paroi du moteur et/ou de son alimentation. Il comprend un capteur inductif ou à effet Hall, arrangé pour capter un camp magnétique et/ou électromagnétique du moteur électrique et/ou de son alimentation.

Le capteur thermique 241 est fixé à une paroi du moteur, notamment de son stator 112. Il comprend un capteur de température arrangé pour capter une température du moteur électrique et/ou d'un composant de la broche.

Le second circuit électronique 22 peut comprendre une unité programmable ou dédiée, telle qu'un microcontrôleur, un microprocesseur, un DSP, un FPGA ou une puce (circuit intégré).

Avantageusement, le second circuit électronique 22 est configuré pour déterminer une force d'usinage, un couple d'usinage et/ou une charge de travail à partir de signaux fournis par ledit premier circuit électronique 24.

Avantageusement, le second circuit électronique 22 est configuré pour déterminer un nombre de cycles de travail et/ou un nombre de pièces usinées à l'aide de la broche à partir de signaux fournis par ledit premier circuit électronique 24.

Avantageusement, le second circuit électronique 22 est configuré pour déterminer un état d'usure de la broche 1, notamment de l'outil d'usinage 12, du moteur électrique 11 et/ou d'un ou des paliers 16 (notamment des roulements du ou des paliers) à partir de signaux fournis par ledit premier circuit électronique 24 et/ou du temps de fonctionnement de la broche.

Un état d'usure de l'outil d'usinage est un état physique de l'outil d'usinage, notamment d'une surface d'usinage, qui diffère de son état lors de sa (première) mise en service et caractérisé par des valeurs physiques comprises dans une plage prédéfinie.

Avantageusement, le second circuit électronique 22 peut être configuré pour générer un premier indicateur (numérique) d'usure en absence d'une détection de l'état d'usure (indicateur par défaut). Ce premier indicateur d'usure indique un état d'usure normale, c'est-à-dire qui ne nécessite pas une révision et/ou un remplacement de la broche, voire de ces composants.

Avantageusement, le second circuit électronique 22 est configuré pour générer un deuxième indicateur (numérique) d'usure en réponse à une détection de l'état d'usure. Ce deuxième indicateur indique un état excessif d'usure qui affecte ou peut affecter la qualité de l'usinage, ce qui rend nécessaire une révision et/ou un remplacement de la broche, voire de ces composantes.

Avantageusement, le second circuit électronique 22 est configuré pour déterminer un état de fonctionnement anormal de la broche, notamment de l'outil d'usinage 12, du moteur électrique 11 et/ou d'un ou des paliers 16 (notamment des roulements du ou des paliers), à partir de signaux fournis par ledit premier circuit électronique 24 et/ou du temps de fonctionnement de la broche.

Un état de fonctionnement anormal de la broche, en particulier de l'outil d'usinage, du moteur électrique et/ou d'un ou des paliers 16, est un état de fonctionnement qui diffère de son état de fonctionnement prévu lors de la conception du la broche.

Avantageusement, le second circuit électronique 22 peut être configuré pour générer un premier indicateur (numérique) de fonctionnement en absence d'une détection de l'état de fonctionnement anormal (c'est-à-dire un indicateur de fonctionnement normal). Ce premier indicateur indique un état de fonctionnement normal, c'est-à-dire qui ne nécessite pas une révision et/ou un remplacement de la broche, voire de ces composants.

Avantageusement, le second circuit électronique 22 est configuré pour générer un deuxième indicateur (numérique) de fonctionnement en réponse à une détection de l'état de fonctionnement anormal (c'est-à-dire un indicateur de fonctionnement anormal). Cet indicateur indique un état de fonctionnent anormale ne garantissant plus la qualité de l'usinage, ce qui nécessite une révision et/ou un remplacement de la broche, voire de ces composants.

Le compteur 20 de la figure 1 peut comprendre une mémoire 23 de stockage de données, configuré pour permettre une écriture et une lecture de données du compteur 20.

En particulier, la mémoire 23 est configurée pour permettre au premier et au second circuit du compteur d'écrire des données concernant le compteur. La mémoire 23 est ensuite configurée pour permettre au second circuit du compteur et/ou module de communication 21 de lire, l'ensemble ou un sous-groupe de ces données, concernant le compteur.

La communication des données entre la mémoire 23 et le premier et second circuit électronique et le module de communication peut s'effectuer par fil ou sans-fil.

Cette mémoire permet de sauvegarder des données techniques, opérationnelle et/ou d'usinage qui facilitent la mise en opération ainsi que les opérations de manutention, de révision et de diagnostic de la broche 1.

Les des données sauvegardées dans ladite mémoire comprennent, notamment: le temps de fonctionnement, l'état d'usure, l'état de fonctionnement anormale, le nombre de cycles de travail et/ou le nombre de pièces usinées.

Les données sauvegardées dans ladite mémoire comprennent de données sauvegardées lors de la fabrication, révision ou réparation de la broche, notamment:
- une identité numérique de la broche,
- un numéro de série,
- une indication du fabricant de la broche;
- une indication du type de broche;
- une indication du nombre de tour maximale de la broche;
- une indication de la puissance, intensité électrique et/ou du voltage pour l'emploi de la broche;
- une indication de machine sur laquelle est utilisée la broche ;
- une indication de la position de la broche sur la machine; et/ou
- un historique de mise en service, de manutention et de révision de la broche.

L'identité numérique de la broche peut mettre en œuvre un marqueur RFID ou similaire.

L'historique peut comprendre une indication de: la première mise en route de la broche, le nombre d'heures au moment de chaque révision, les éléments de la broche qui ont été changés, les causes de la révision, et/ou l'entreprise qui a effectué la révision.

Le module de communication 21, éventuellement au travers du second circuit électronique sous forme d'une unité programmable ou dédié, est arrangé pour transmettre ces données, ou au moins un sous-groupe de ces données, sauvegardées dans la mémoire au travers de l'interface de communication avec ou sans fils.

Avantageusement, le module de communication 21, éventuellement au travers du second circuit électronique sous forme d'une unité programmable ou dédié, est arrangé pour transmettre les données brutes qui sont délivrées par le premier circuit électronique 24, 240, 241, 242 (où ils ont été préalablement délivrés et ensuite stockés dans la mémoire) , ceci dans un but de diagnostic. Cette communication peut être effectuée par exemple une fois par heure, par jour, par semaine, ou de manière quasi continue.

En particulier, la transmission est activée par la réception d'un signal et/ou d'une commande au travers de l'interface de communication avec ou sans fils, ou à intervalles périodiques. Avantageusement, un set de signaux et/ou commandes peut être défini, chaque signal et/ou commande permettant de déclencher une transmission d'un ou d'un sous-groupe distinct de données.

L'interface de communication sans fils peut être un dispositif ou module configuré pour échanger de données selon une norme de communication Bluetooth, ANT, Wi-Fi, LoRa et/ou RFID.

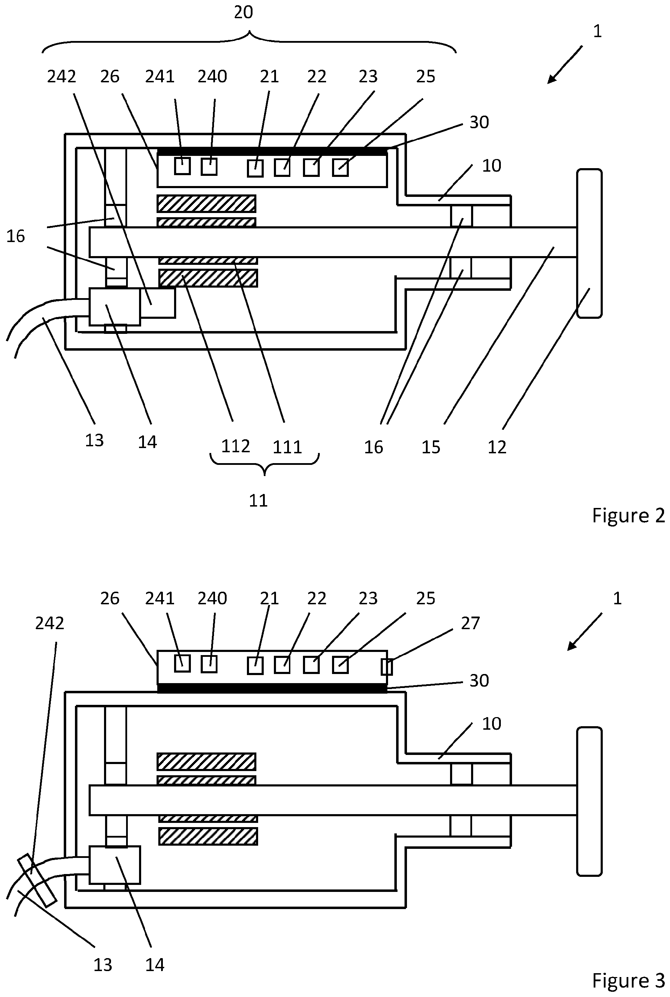

Les figures 2 et 3 illustrent deux modes de réalisation particulièrement avantageux du compteur 20.

Selon l'invention, le second circuit électronique 22 et le module de communication 21 sont enfermés dans une capsule 26 de protection contre une intrusion de poussière et/ou de liquides.

La capsule, qui peut être conçue selon des normes et/ou standards internationales relatif à l'étanchéité (par ex.: IP 45, IP 55 ou 65), permet de protéger ces circuits contre une intrusion de poussière et/ou de liquides. Selon l'invention, le compteur est installé sur une paroi externe du boîtier de la broche (Figure 3).

La capsule peut être fixée au boîtier de la broche au travers de moyens de fixation, tels que des vis, des clous, des arrangements vis-écrou, des clips, une couche 30 de matériel magnétique et/ou adhésif.

La capsule des figures 2 et 3 comprend en outre un ou plusieurs accéléromètres 240 arrangés pour capter des vibrations affectant le boîtier 10 ainsi qu'un ou plusieurs capteurs thermiques arrangés pour capter une température du boîtier.

Le compteur 20 de la figure 2 comprend en outre un circuit inductif ou un capteur de champ magnétique positionné sur une surface de l'alimentation et/ou du moteur de la broche de sorte à capter leurs champs électromagnétiques.

Le compteur 20 de la figure 3 comprend en outre un circuit inductif sous forme d'un anneau positionné autour du câble 13 d'alimentation de la broche de sorte à capter le camp électromagnétique généré par la courante électrique délivrée au moteur de la broche.

Avantageusement, la capsule peut aussi contenir le premier circuit électronique, notamment sous forme d'un capteur de vibration 240, d'un circuit inductif ou un capteur de champ magnétique 242 et/ou d'un capteur thermique 241. La capsule peut aussi contenir la source d'alimentation électrique 25 pour l'alimentation du compteur 20. Cet arrangement permet de rendre le compteur autonome par rapport à la broche, ce qui facilite son installation sur des broches de diverses typologies de fabrication ainsi qu'un mise-à-jour d'une broche du marché.

La source d'alimentation électrique comprend une batterie rechargeable ou un accumulateur et peut être configurée pour être rechargée lors du fonctionnement de la broche et/ou au moyen d'un connecteur et/ou sans fils.

Le compteur peut comprendre un indicateur visuel 27 d'état de fonctionnement, par exemple logé sur ou dans une paroi de la capsule, arrangé pour fournir une indication visuelle à un opérateur.

L'indication visuelle peut être fonction: du temps de fonctionnement, de l'état d'usure, d'un état de fonctionnement anormale, du nombre de cycles de travail et/ou du nombre de pièces usinées.

La lecture des informations sur la broche pourra se faire à l'aide d'un lecteur sans fil, c'est-à-dire un scanner. Les données une fois sur le scanner pourront être envoyées vers un ordinateur central (par exemple un serveur) à des fins de gestion du parc des broches. Le scanner permet à un utilisateur (notamment un technicien d'usinage) de prélever les données de chaque broche en fonction des besoins. Les informations se trouvant sur les broches peuvent être ensuite, soit directement soit au travers du scanner, transférées sans fil à serveur exécutant un logiciel de gestion du parc de broches.

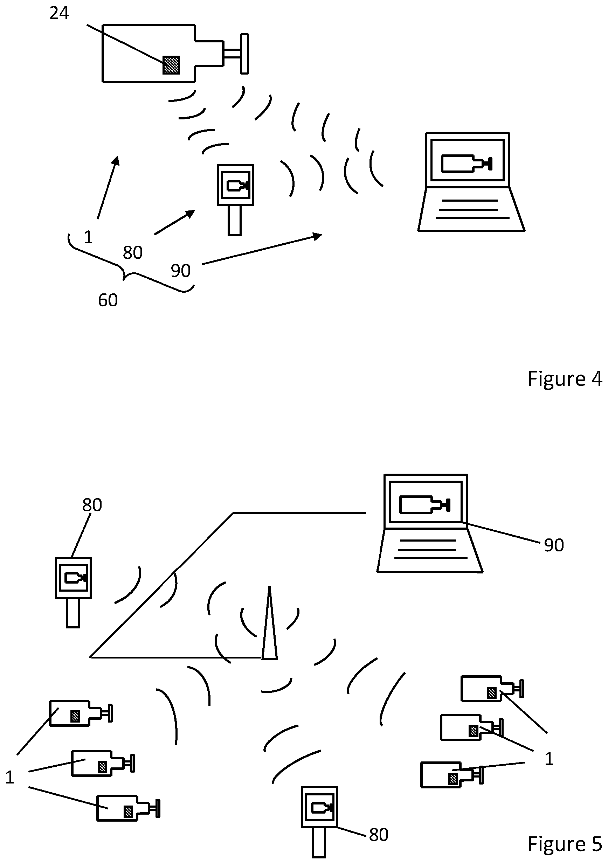

La figure 4 illustre graphiquement la gestion de la broche 1 au moyen d'un scanner 80 et/ou un serveur 90 de gestion de broches d'usinage.

Le scanner 80 et/ou serveur 90 comprennent un module de communication permettant de recevoir des données concernant la broche qui ont été collectées et/ou déterminées par le compteur (ou délivrées par son premier circuit électronique) qui l'équipe, au travers d'une interface de communication sans fils compatible avec celle de équipant le compteur de la broche (par exemple au travers d'un dispositif ou module communicant selon la norme de communication Bluetooth, ANT, Wi-Fi, LoRa et/ou RFID).

Eventuellement, le module de communication est configuré pour transmettre le signal et/ou commande à la broche 1, de sorte à déclencher dans le compteur une transmission d'un ou d'un sous-groupe distinct de données.

Ces données concernent notamment : le temps de fonctionnement, l'état d'usure, un état de fonctionnement anormale, le nombre de cycles de travail et/ou le nombre de pièces usinées par la broche 1.

Les données peuvent, complémentairement ou alternativement, concernées des données sauvegardées lors de la fabrication, révision ou réparation de la broche, notamment:
- l'identité numérique de la broche,
- le numéro de série,
- l'indication du fabricant de la broche;
- l'indication du type de broche;
- l'indication du nombre de tour maximale de la broche;
- l'indication de la puissance, intensité électrique et/ou du voltage pour l'emploi de la broche;
- l'indication de machine sur laquelle est utilisé la broche;
- l'indication de la position de la broche sur la machine; et/ou
- un historique de mise en service, de manutention et de révision de la broche.

Ces données techniques, opérationnelle et/ou d'usinage permettent à un responsable de l'atelier de déterminer l'opérationnalité de la broche ainsi que son plan de manutention, révision, éventuellement son remplacement, ceci sans devoir recourir à des systèmes d'annotation d'heures de travail de chaque broche se basant sur des annotations manuelles ou des sensation de la part de techniciens d'usinage, des fiches ou tableaux d'usinages de pièces et/ou d'opérations de mesures sur des composant de la broche.

Ces données techniques, opérationnelle et/ou d'usinage permettent à un technicien d'usinage, muni du scanner 80, d'obtenir des données relatives à la broche, notamment sans devoir consulter le mode d'emploi de la broche et les tableaux d'usinage concernant la broche, notamment dans le but de choisir une broche pour un usinage particulier, et de déterminer et/ou vérifier les réglages d'une machine supportant la broche.

La figure 5 illustre graphiquement un exemple de gestion de l'ensemble des broches 1 d'usinage d'un atelier (c'est-à-dire d'un parc de broches 1) au moyen de scanner 80 et d'un serveur 90.

Avantageusement, le serveur 90 est muni d'un logiciel permettant une gestion globale du parc de broche avec indicateur de d'état en fonction de données livrées par le compteur équipant chaque broche et/ou de données brut délivrées par le premier circuit électronique du compteur.

Avantageusement, le serveur est configuré au travers d'un logiciel pour déterminer, à partir de signaux fournis par ledit premier circuit électronique 24 et/ou du temps de fonctionnement de chaque broche 1 :
- le nombre de cycles de travail et/ou un nombre de pièces usinées à l'aide de la broche; et/ou
- l'état d'usure de la broche 1, notamment de l'outil d'usinage 12, du moteur électrique 11 et/ou d'un ou des paliers 16 (notamment des roulements du ou des paliers); et/ou
- l'état de fonctionnement anormal de la broche, notamment de l'outil d'usinage 12, du moteur électrique 11 et/ou d'un ou des paliers 16 (notamment des roulements du ou des paliers),
ceci en alternative ou de manière complémentaire au second circuit électronique 22 de la broche 1.

Ceci permet une gestion complète du parc des broches et notamment une maintenance prédictive permettant une planification du changement préventif des broches.

Au travers du logiciel, une signature vibratoire pour chaque type de broches sera déterminée, et des seuils pour les signatures vibratoires et/ou des maxima de température pour les paliers sont fixés. En fonction de ces seuils, les données collectées par le scanner et/ou le serveur permettent de donner un aperçu de l'état de chaque broche du parc en termes de qualités et d'usures. Ces paramètres peuvent être déterminés par apprentissages et/ou par des essais sur un banc de mesure.

Le serveur, au travers de ce logiciel, est ainsi configuré pour indiquer l'état de chaque broche par un code couleur, qui peut être le suivant :
- couleur vert: lorsque tant les vibrations de la broche, notamment d'un de ses composantes tel que les paliers, que les températures sont dans les normes acceptables et ne nécessite pas d'intervention;
- couleur orange : les vibrations de la broche (notamment d'un de ses composants tel que les paliers), et/ou les températures de la broche (notamment d'un de ses composantes tel que les paliers) sont dans des normes (c'est-à-dire dans une plage de valeurs) qui nécessiteraient un changement de la broche. La qualité de l'usinage peut être affectée. Une intervention est à planifier;
- couleur rouge : La broche ne respecte plus du tout les normes permettant d'assurer une qualité et une fiabilité suffisante. La broche peut lâcher à tout moment ou est déjà arrêtée. Ce cas de figure nécessitera une intervention d'urgence non planifié et un arrêt de la machine de production.

Ainsi, la décision de remplacer une broche dépend de différents seuils prédéterminés dans le serveur, notamment de seuils pour les signatures vibratoires et/ou des maxima de température

La valeur de ces seuils peut dépendre du type et du modèle de broche; certaines broches doivent être remplacées plus fréquemment que d'autres.

La valeur de ces seuils peut également, ou alternativement, dépendre de choix de l'utilisateur. Certains utilisateurs qui ont besoin d'une précision élevée et/ou d'une fiabilité très grande peuvent par exemple choisir des seuils plus restrictifs.

Le serveur peut aussi comprendre un module d'auto-apprentissage, par exemple un module basé sur des réseaux neuronaux recevant en entrée des identifications de type de broche, de nombre d'heures d'utilisation, de paramètres de vibration et/ou de température, et entraîné à l'aide d'informations de défaillance ou de mesures de tolérance, afin de déterminer automatiquement les seuils.

Avantageusement, le serveur, au travers du logiciel, permet la saisie de données techniques ou de gestion supplémentaires concernant chaque broche du parc, notamment une indication de: l'entreprise(s) de révision, la durée de révision, la durée d'intervention sur machine pour changement de broche, le prix de la broche, le prix de révision, la valeur de révision (cône, face, avec ou sans pinnule), la force du dispositif de serrage, le type de cône de la broche, le battement de la pinnule de contrôle, et/ou le nombre d'heures de garantie (neuve et après révision).

Ces données peuvent comprendre en outre une indication: de températures maximales admissibles sur les paliers (sonde de température intérieure et/ou extérieure), de la signature vibratoire (seuil : vert, orange, rouge) et/ou du nombre de broches en stock disponibles pour un échange.

Avantageusement, le serveur est configuré, au travers du logiciel, pour établir et mettre à jour un plan de manutention, de révision et de remplacement de chaque broche du parc en fonction des données reçu du compteur de chaque broche et de ces données supplémentaires.

Avantageusement, le serveur est configuré, au travers du logiciel, pour afficher au travers d'une interface utilisateur: la liste de toutes les broches, une indication des heures de fonctionnement effectives de chaque broche et/ou du parc de broches, une indication des broches sous ou hors garantie en fonction du nombre d'heures au compteur, le seuil prédictif en fonction des données des capteurs ou du nombre d'heures (vert - orange - rouge), une alarme pour changement de seuil (température - vibrations).

De plus, cette solution permet une gestion non seulement de broches 1 d'usinage en fonction ou prêtes pour un usinage, mais également de broches d'usinage qui sont stockées dans un ou plusieurs lieux de rangement de l'atelier en attente d'un usage.

### Numéros de référence employés sur les figures

- 1: broche motorisée
- 10: boîtier
- 101: surface externe du boîtier
- 102: surface interne du boîtier
- 11: moteur électrique
- 111: rotor
- 112: stator
- 12: outil d'usinage
- 13: câble d'alimentation
- 14: alimentation
- 15: arbre
- 16: palier
- 20: compteur de temps de fonctionnement
- 21: émetteur-récepteur
- 22: unité de traitement de données
- 23: mémoire de stockage de données
- 24: circuit électronique de déterminer d'un état de rotation du moteur;
- 240: accéléromètre
- 241: capteur de température
- 242: capteur à effet Hall
- 25: batterie
- 26: capsule de protection
- 27: LED
- 30: couche d'adhésif
- 60: set d'usinage
- 80: scanner portable de lecture
- 90: serveur

## Revendications

1. Broche (1) pour usinage comprenant:
un boîtier (10) renfermant un moteur (11) électrique entrainant en rotation un outil d'usinage (12), ledit outil d'usinage étant monté en rotation par rapport au boîtier au moyen d'au moins un palier (16) de préférence à roulement;
un compteur (20) de temps de fonctionnement électronique comprenant:
un premier circuit électronique (24, 240, 241, 242) arrangé pour déterminer un état de rotation du moteur (11) et/ou de l'outil d'usinage (12);
un second circuit électronique (22) configuré pour effectuer un comptage du temps de fonctionnement de la broche à partir de signaux fournis par ledit premier circuit électronique (24); et
un module de communication (21) arrangé pour transmettre ledit temps de fonctionnement à travers une interface de communication, de préférence sans fils ;
une source d'alimentation électrique (25) comportant une batterie (25) rechargeable ou un accumulateur;
le premier circuit électronique comprenant un circuit inductif ou un capteur de champ magnétique, de préférence un capteur à effet Hall, arrangé pour capter un camp magnétique et/ou électromagnétique du moteur (11) électrique et/ou d'une alimentation (13, 14) du moteur;
**caractérisé en ce que** le second circuit électronique (22), le module de communication (21) et la source d'alimentation électrique (25) sont enfermés dans une capsule (26) de protection contre une intrusion de poussière et/ou de liquides ;
**et en ce que** ladite capsule (26) de protection est fixée sur une surface externe dudit boîtier (10) de la broche (1), de préférence au travers de moyens de fixation magnétiques et/ou adhésifs (30).

2. Broche selon la revendication 1,
ladite batterie (25) rechargeable ou ledit accumulateur étant configuré pour être rechargé lors du fonctionnement de la broche et/ou au moyen d'un connecteur et/ou sans fils.

3. Broche selon l'une des revendications 1 à 2,
le circuit inductif (242) étant sous forme d'un anneau positionné autour d'un câble (13) d'alimentation dudit moteur (11) électrique de la broche et configuré pour capter le camp électromagnétique généré par la courante électrique délivrée au moteur de la broche.

4. Broche selon l'une des revendications 1 à 3,,
le premier circuit électronique (24, 240, 241) dudit compteur (20) étant enfermé dans la capsule (26) de protection;
ledit compteur (20) étant de préférence enfermé dans la capsule (26) de protection.

5. Broche selon l'une des revendications 1 à 4, le premier circuit électronique comprenant:
un capteur de vibration, de préférence comprenant un ou plusieurs accéléromètres, arrangé pour capter des vibrations affectant le boîtier (10), ledit au moins un palier (16), le moteur (11) électrique et/ou l'outil d'usinage; et/ou
un capteur thermique, comprenant de préférence un ou plusieurs capteurs de température, arrangé pour capter une température du boîtier (10), dudit au moins un palier (16), du moteur (11) électrique et/ou de l'outil d'usinage.

6. Broche selon l'une des revendications 1 à 5,
ledit second circuit électronique étant configuré pour déterminer une force d'usinage, un couple d'usinage, une charge de travail, un nombre de cycles de travail et/ou un nombre de pièces usinées à l'aide de la broche à partir de signaux fournis par ledit premier circuit électronique (24).

7. Broche selon l'une des revendications 1 à 6, ledit second circuit électronique étant configuré pour déterminer:
un état d'usure de la broche ou d'un de ses composantes, en particulier de l'outil d'usinage (12), du moteur électrique (11) et/ou dudit au moins un palier (16); et/ou
un état de fonctionnement anormale de la broche ou d'un de ses composantes, en particulier de l'outil d'usinage (12), du moteur électrique (11) et/ou dudit au moins un palier (16),
à partir du temps de fonctionnement de la broche compté par ledit second circuit électronique (22) et/ou des signaux fournis par ledit premier circuit électronique (24).

8. Broche selon l'une des revendications 1 à 7,
le compteur (20) comprenant une mémoire (23) de stockage de données;
ledit module de communication (21) étant arrangé pour transmettre des données sauvegardées dans ladite mémoire;
lesdites données comprenant ledit temps de fonctionnement, ledit état d'usure, ledit état de fonctionnement anormale, ledit nombre de cycles de travail et/ou ledit nombre de pièces usinées.

9. Broche selon la revendication 8,
lesdites données comprenant en outre: une identité numérique de la broche, un numéro de série, une indication du fabricant de la broche, une indication du type de broche, une indication du nombre de tour maximale de la broche, une indication de la puissance, intensité électrique et/ou du voltage pour l'emploi de la broche, une indication de machine sur laquelle est utilisée la broche, une indication de la position de la broche sur la machine, et/ou une historique de mise en service de la broche.

10. Broche selon l'une des revendications 1 à 9,
la broche et/ou le un compteur (20) comprenant un indicateur visuel (27) d'état de fonctionnement fournissant une indication visuelle, l'indication visuelle étant fonction: dudit temps de fonctionnement, dudit état d'usure, dudit état de fonctionnement anormale, dudit nombre de cycles de travail et/ou dudit nombre de pièces usinées.

11. Broche selon l'une des revendications 1 à 10,
ladite interface de communication sans fils étant un dispositif ou module configuré pour échanger de données selon une norme de communication Bluetooth, ANT, Wi-Fi, LoRa et/ou RFID.

12. Set d'usinage (60), comprenant:
au moins une broche d'usinage (1) selon l'une des revendications 1 à 11, et
un dispositif (80, 90) de gestion de broches d'usinage arrangé pour recevoir à travers d'une interface de communication de préférence sans fils: ledit temps de fonctionnement, ledit état d'usure, ledit état de fonctionnement anormale, ledit nombre de cycles de travail et/ou ledit nombre de pièces usinées dudit au moins une broche d'usinage (1).

13. Set d'usinage (60) selon la revendication 12, comprenant :
un serveur configuré pour déterminer un indicateur d'état pour chaque broche dudit au moins une broche d'usinage en fonction du temps de fonctionnement de la broche et/ou des signaux fournis par ledit premier circuit électronique (24) de la broche;
ledit indicateur d'état étant déterminé parmi au moins deux indicateurs d'état distincts, un parmi lesdits au moins deux indicateurs d'état indiquant un état normale de la broche, et l'autre parmi lesdits au moins deux indicateurs d'état indiquant un état de la broche nécessitant sa révision et/ou son changement.

## Patentansprüche

1. Bearbeitungsspindel (1) umfassend:
ein Gehäuse (10), das einen Elektromotor (11) umschließt, der ein Bearbeitungswerkzeug (12) in Drehung versetzt, wobei das genannte Bearbeitungswerkzeug mittels mindestens eines Lagers (16), vorzugsweise eines Wälzlagers, gegenüber dem Gehäuse drehbar gelagert ist;
einen elektronischen Betriebszeitzähler (20), Folgendes umfassend:
eine erste elektronische Schaltung (24, 240, 241, 242), die angeordnet ist, um einen Rotationszustand des Motors (11) und/oder Bearbeitungswerkzeugs (12) zu bestimmen;
eine zweite elektronische Schaltung (22), die konfiguriert ist, um eine Zählung der Spindelbetriebszeit anhand von Signalen durchzuführen, die von der ersten elektronischen Schaltung (24) bereitgestellt werden; und
ein Kommunikationsmodul (21), das angeordnet ist, um die Betriebszeit über eine Kommunikationsschnittstelle, vorzugsweise drahtlos, zu übertragen;
eine Stromquelle (25), die eine wiederaufladbare Batterie (25) oder einen Akkumulator aufweist;
wobei die erste elektronische Schaltung eine induktive Schaltung oder einen Magnetfeldsensor, vorzugsweise einen Hall-Effekt-Sensor, umfasst, wobei der Magnetfeldsensor so angeordnet ist, dass er ein magnetisches und/oder elektromagnetisches Lager des Elektromotors (11) und/oder einer Stromversorgung (13, 14) des Motors erfasst;
**dadurch gekennzeichnet, dass** die zweite elektronische Schaltung (22), das Kommunikationsmodul (21), und die Stromquelle (25) in einer Schutzkapsel (26) eingeschlossen sind, um sie vor dem Eindringen von Staub und/oder Flüssigkeiten zu schützen;
**und dadurch, dass** die Schutzkapsel (26) an einer Außenfläche des Gehäuses (10) der Spindel (1), vorzugsweise durch magnetische und/oder klebende Befestigungsmittel (30) befestigt ist.

2. Spindel nach Anspruch 1,
wobei die wiederaufladbare Batterie (25) oder der Akkumulator so konfiguriert ist, dass er während des Betriebs der Spindel und/oder mittels eines Steckers und/oder drahtlos aufgeladen werden kann.

3. Spindel nach einem der Ansprüche 1 bis 2,
wobei die induktive Schaltung (242) in Form eines Rings vorliegt, der um ein Kabel (13) zur Versorgung des Elektromotors (11) der Spindel positioniert und so konfiguriert ist, dass er das elektromagnetisches Feld erfasst, das durch den an den Motor der Spindel gelieferten elektrischen Strom erzeugt wird.

4. Spindel nach einem der Ansprüche 1 bis 3,
wobei die erste elektronische Schaltung (24, 240, 241) des Zählers (20) in der Schutzkapsel (26) eingeschlossen ist;
wobei der Zähler (20) vorzugsweise in der Schutzkapsel (26) eingeschlossen ist.

5. Spindel nach einem der Ansprüche 1 bis 4, wobei die erste elektronische Schaltung Folgendes umfasst:
einen Vibrationssensor, der vorzugsweise mit einem oder mehreren Beschleunigungsmessern ausgestattet ist und der so angeordnet ist, dass er Vibrationen erfasst, die auf das das Gehäuse (10), das mindestens eine Lager (16), den Elektromotor (11) und/oder das Bearbeitungswerkzeug einwirken; und/oder
einen thermischen Sensor, der vorzugsweise einen oder mehrere Temperatursensoren umfasst und der so angeordnet ist, dass er eine Temperatur des Gehäuses (10), des mindestens einen Lagers (16), des Elektromotors (11) und/oder des Bearbeitungswerkzeugs erfasst.

6. Spindel nach einem der Ansprüche 1 bis 5,
wobei die zweite elektronische Schaltung so konfiguriert ist, dass sie eine Bearbeitungskraft, ein Bearbeitungsdrehmoment, eine Arbeitsauslastung, eine Anzahl von Arbeitszyklen und/oder eine Anzahl von Werkstücken, die mithilfe der Spindel anhand von Signalen bearbeitet werden, die von der ersten elektronischen Schaltung (24) bereitgestellt werden.

7. Spindel nach einem der Ansprüche 1 bis 6, wobei die zweite elektronische Schaltung so konfiguriert ist, dass sie Folgendes bestimmt:
einen Verschleißzustand der Spindel oder einer ihrer Komponenten, insbesondere Bearbeitungswerkzeugs (12), des Elektromotors (11) und/oder des mindestens ein Lager (16); und/oder
ein anormaler Betriebszustand der Spindel oder einer ihrer Komponenten, insbesondere des Bearbeitungswerkzeugs (12), des Elektromotors (11) und/oder des mindestens einen Lagers (16),
aus der Betriebszeit der Spindel, die von dem genannten zweiten elektronischen Schaltung (22) und/oder von der ersten elektronischen Schaltung (24) gelieferte Signale.

8. Spindel nach einem der Ansprüche 1 bis 7,
wobei der Zähler (20) einen Speicher (23) zum Speichern von Daten umfasst;
wobei das Kommunikationsmodul (21) so angeordnet ist, dass es die Date, die in dem Speicher gespeichert sind, überträgt; und
wobei die Daten die Betriebszeit, den Verschleißzustand, den abnormalen Betriebszustand, die Anzahl der und/oder die Anzahl der bearbeiteten Werkstücke umfassen.

9. Spindel nach Anspruch 8,
wobei die Daten weiters Folgendes umfassen: eine numerische Identität der Spindel, eine Seriennummer, eine Angabe des Spindelherstellers, eine Angabe des Spindeltyps, eine Angabe der maximalen Umdrehungszahl der Spindel, eine Angabe der elektrischen Leistung, der Stromstärke und/oder der Spannung für Verwendung der Spindel, eine Angabe der Maschine, auf der die Spindel verwendet wird, eine Angabe der Position der Spindel auf der Maschine und/oder eine Historie der Inbetriebnahme der Spindel.

10. Spindel nach einem der Ansprüche 1 bis 9,
die Spindel und/oder der Zähler (20), der eine visuelle Betriebszustandsanzeige (27) aufweist, die eine visuelle Indikation liefert, wobei die visuelle Indikation eine Funktion ist von: der Betriebszeit, des Verschleißzustands, des abnormalen Betriebszustands, der Anzahl von Arbeitszyklen und/oder der Anzahl von bearbeiteten Teilen.

11. Spindel nach einem der Ansprüche 1 bis 10,
wobei die drahtlose Kommunikationsschnittstelle ein Gerät ist oder Modul, das zum Austausch von Daten gemäß einem Bluetooth-, ANT-, Wi-Fi-, LoRa- und/oder RFID-Kommunikationsstandard konfiguriert ist.

12. Bearbeitungsset (60), umfassend:
mindestens eine Bearbeitungsspindel (1) nach einem der Ansprüche 1 bis 11, und
einer Vorrichtung (80, 90) zum Managen von Bearbeitungsspindeln, die so angeordnet ist, dass sie über eine vorzugsweise drahtlose Kommunikationsschnittstelle Folgendes empfängt: die Betriebszeit, den Verschleißzustand, den anormalen Betriebszustand, die Anzahl der Arbeitszyklen und/oder die Anzahl der bearbeiteten Werkstücke der mindestens einen Bearbeitungsspindel (1).

13. Bearbeitungsset (60) nach Anspruch 12, umfassend :
einen Server, der so konfiguriert ist, dass er einen Statusindikator für jede Spindel der mindestens einen Bearbeitungsspindel als Funktion der Betriebszeit der Spindel und/oder der von der ersten elektronischen Schaltung (24) der Spindel gelieferten Signale bestimmt;
wobei der Zustandsindikator aus mindestens zwei verschiedenen Zustandsindikatoren bestimmt wird, wobei einer der mindestens zwei Zustandsindikatoren einen normalen Zustand Spindel anzeigt und der andere der mindestens zwei Zustandsindikatoren einen Zustand der Spindel anzeigt, der ihre Überholung und/oder ihren Austausch erfordert.

## Claims

1. Spindle (1) for machining, comprising:
a housing (10) enclosing an electric motor (11) rotatably driving a machining tool (12), said machining tool being rotatably mounted relative to the housing by means of at least one bearing (16), preferably a roller bearing;
an electronic operating time counter (20) comprising:
a first electronic circuit (24, 240, 241, 242) arranged to determine a rotation state of the motor (11) and/or the machining tool (12);
a second electronic circuit (22) configured to count the operating time of the spindle from signals supplied by said first electronic circuit (24); and
a communication module (21) arranged to transmit said operating time through a communication interface, preferably wireless;
an electrical power supply (25) comprising a rechargeable battery (25) or an accumulator;
the first electronic circuit comprising an inductive circuit or a magnetic field sensor, preferably a Hall effect sensor, arranged to detect a magnetic and/or electromagnetic field of the electric motor (11) and/or of a power supply (13, 14) of the motor;
**characterized in that** the second electronic circuit (22), the communication module (21) and the electrical power supply (25) are enclosed in a protection capsule (26) against an intrusion of dust and/or liquids;
**and in that** said protection capsule (26) is fixed to an external surface of said housing (10) of the spindle (1), preferably by means of magnetic and/or adhesive fasteners (30).

2. Spindle according to claim 1, said rechargeable battery (25) or said accumulator being configured to be recharged during operation of the spindle and/or by means of a connector and/or wirelessly.

3. Spindle according to one of claims 1 to 2, the inductive circuit (242) being in the form of a ring positioned around a cable (13) supplying power to said electric motor (11) of the spindle and configured to detect the electromagnetic field generated by the electric current supplied to the spindle motor.

4. Spindle according to one of claims 1 to 3, the first electronic circuit (24, 240, 241) of said counter (20) being enclosed in the protection capsule (26);
said counter (20) being preferably enclosed in the protection capsule (26).

5. Spindle according to one of claims 1 to 4, the first electronic circuit comprising:
a vibration sensor, preferably comprising one or more accelerometers, arranged to detect vibrations affecting the housing (10), said at least one bearing (16), the electric motor (11) and/or the machining tool; and/or
a thermal sensor, preferably comprising one or more temperature sensors, arranged to detect a temperature of the housing (10), said at least one bearing (16), the electric motor (11) and/or the machining tool.

6. Spindle according to one of claims 1 to 5, said second electronic circuit being configured to determine a machining force, a machining torque, a work load, a number of work cycles and/or a number of machined parts using the spindle from signals supplied by said first electronic circuit (24).

7. Spindle according to one of claims 1 to 6, said second electronic circuit being configured to determine:
a wear condition of the spindle or one of its components, in particular the machining tool (12), the electric motor (11) and/or said at least one bearing (16); and/or
an abnormal operating condition of the spindle or one of its components, in particular the machining tool (12), the electric motor (11) and/or the at least one bearing (16),
based on the operating time of the spindle counted by the second electronic circuit (22) and/or signals provided by the first electronic circuit (24).

8. Spindle according to one of claims 1 to 7,
the counter (20) comprising a data storage memory (23);
said communication module (21) being arranged to transmit data stored in said memory;
said data comprising said operating time, said wear condition, said abnormal operating condition, said number of work cycles, and/or said number of machined parts.

9. Spindle according to claim 8, said data further comprising: a numerical identity of the spindle, a serial number, an indication of the manufacturer of the spindle, an indication of the type of spindle, an indication of the maximum number of revolutions of the spindle, an indication of the power, electrical intensity and/or voltage for use of the spindle, an indication of the machine on which the spindle is used, an indication of the position of the spindle on the machine, and/or a history of the commissioning of the spindle.

10. Spindle according to one of claims 1 to 9,
the spindle and/or the counter (20) comprising a visual operating status indicator (27) providing a visual indication, the visual indication being a function of: said operating time, said wear condition, said abnormal operating condition, said number of work cycles, and/or said number of machined parts.

11. Spindle according to one of claims 1 to 10, said wireless communication interface being a device or module configured to exchange data according to a Bluetooth, ANT, Wi-Fi, LoRa and/or RFID communication standard.

12. Machining set (60), comprising:
at least one machining spindle (1) according to one of claims 1 to 11, and
a machining spindle management device (80, 90) arranged to receive, via a preferably wireless communication interface: said operating time, said wear condition, said abnormal operating condition, said number of work cycles and/or said number of machined parts of said at least one machining spindle (1).

13. Machining set (60) according to claim 12, comprising:
a server configured to determine a status indicator for each spindle of said at least one machining spindle based on the operating time of the spindle and/or signals provided by said first electronic circuit (24) of the spindle;
said status indicator being determined from among at least two distinct status indicators, one of said at least two status indicators indicating a normal state of the spindle, and the other of said at least two status indicators indicating a state of the spindle requiring its overhaul and/or replacement.
